# EUROPÄISCHE PATENTANMELDUNG

(11) **EP 2 083 343 A1**
(43) Veröffentlichungstag der Anmeldung: **29.07.2009**
(21) Anmeldenummer: 08001518.3
(22) Anmeldetag: 28.01.2008
(51) Int. Cl.: G05D 16/00, G05G 1/10, G05G 5/03

(54) **Druckregler**

(71) Anmelder: TESCOM EUROPE GMBH & CO. KG, 23923 Selmsdorf (DE)
(72) Erfinder: Basler, Christian, 23556 Lübeck (DE)
(74) Vertreter: Hemmer, Arnd

(57) **Zusammenfassung**

Die Erfindung betrifft einen Druckregler mit einem drehbaren Handrad zur Einstellung des Druckes, bei welchem das Handrad mit einer Rasterung versehen ist.

## Beschreibung

Die Erfindung betrifft einen Druckregler mit einem drehbaren Handrad zur Einstellung des Druckes.

Derartige Druckregler sind hinlänglich bekannt und werden eingesetzt, um einen Eingangsdruck auf einen niedrigeren Ausgangsdruck zu reduzieren und den Ausgangsdruck konstant bei einem voreingestellten Druck zu halten. Zur Voreinstellung des Druckes ist üblicherweise ein drehbares Handrad vorgesehen, durch dessen Drehung eine Feder mehr oder weniger stark gestaucht wird und aufgrund ihrer Federkraft den Druck vorgibt.

Aufgabe der Erfindung ist es, einen derartigen Druckregler derart zu verbessern, dass er eine genauere Einstellbarkeit des Druckes und für den Benutzer ein besseres Gefühl bei der Einstellung des Druckes ermöglicht.

Diese Aufgabe wird gelöst durch einen Druckregler mit den im Anspruch 1 angegebenen Merkmalen. Bevorzugte Ausführungsformen ergeben sich aus den Unteransprüchen, der nachfolgenden Beschreibung sowie den beigefügten Figuren.

Erfindungsgemäß ist das Handrad bei dem Druckregler mit einer Rasterung versehen. Dies bedeutet, dass der Benutzer beim Drehen des Handrades aufeinanderfolgend Rastpunkte zu überwinden hat. Es gibt somit eine Zahl aufeinanderfolgender Widerstände, welche beim Drehen des Handrades zu überwinden sind. Dabei sind die Rastungen bzw. Widerstände vorzugsweise so gewählt, dass keine große Kraft zur Überwindung aufzuwenden ist, jedoch die einzelnen Rastungen für den Benutzer deutlich spürbar sind. Durch diese Rasterung wird ein feinfühligeres Einstellen des Druckes möglich, da der Benutzer beim Drehen des Handrades ein besseres Gefühl dafür hat, wie weit er das Handrad gedreht hat oder nicht.

Vorzugsweise weist die Rasterung eine regelmäßige Teilung auf. D. h. die einzelnen Rastpunkte bzw. Widerstände sind in Abhängigkeit des Drehwinkels des Handrades regelmäßig verteilt, d. h. in regelmäßigen Winkelabständen. Dadurch wird ein gleichmäßiges Einstellen des Druckes über den gesamten Einstellbereich des Druckreglers möglich. Es ist jedoch auch denkbar, die Abstände der Rastpunkte der Rasterungen über den Drehwinkel unterschiedlich auszubilden, um beispielsweise in unterschiedlichen Druckbereichen dem Benutzer beim Einstellen ein anderes Gefühl für die Einstellung zu geben, je nachdem, ob es sich um einen Druckbereich handelt, in welchem er gröbere Einstellschritte oder feinere Einstellschritte gewünscht sind. Zur Realisierung einer feinen Einstellung ist die Teilung vorzugsweise möglichst klein ausgebildet.

Jeder Rastschritt der Rasterung kann vorzugsweise einer vorbestimmten Änderung des eingestellten Druckes entsprechen. Wenn die einzelnen Rastschritte bzw. Rastpunkte oder Widerstände, welche beim Drehen des Handrades zu überwinden sind, in regelmäßigen Winkelabständen über den Drehwinkel des Handrades verteilt sind, wird bei einer linearen Federkennlinie des Druckreglers auch die Federkraft der Feder in dem Druckregler proportional zu den einzelnen Rastschritten geändert, so dass sich der eingestellte Druck proportional zu den Rastschritten ändert.

Gemäß einer bevorzugten Ausführungsform ist das Handrad relativ zu einem Reglergehäuse drehbar und an einer dem Reglergehäuse zugewandten Seite mit zumindest einem Rastelement versehen. Ferner ist an dem Reglergehäuse bei dieser bevorzugten Ausführungsform zumindest ein korrespondierendes Rastelement derart angeordnet, dass es bei Drehung des Handrades mit dem zumindest einen Rastelement an dem Handrad in Eingriff tritt. D. h. an Handrad und Reglergehäuse sind gegenüberliegend bzw. einander zugewandt Rastelemente ausgebildet, welche beim Drehen des Handrades miteinander in Kontakt oder Eingriff treten. Bei weiterer Drehung des Handrades treten diese Rastelemente dann wieder außer Eingriff. Die Rastelemente bilden somit die Rastpunkte bzw. Widerstände der Rasterung, welche bei Drehung des Handrades überwunden werden müssen. Vorzugsweise ist zumindest eines der Rastelemente, d. h. das Rastelement am Handrad oder Reglergehäuse federnd ausgebildet, so dass bei Überwindung dessen Federkraft dieses Rastelement von dem korrespondierenden gegenüberliegenden Rastelement wieder außer Eingriff tritt und so der auf diese Weise gebildete Rastpunkt bzw. Widerstand überwunden wird.

Vorzugsweise sind bei dieser Ausführungsform entweder an dem Handrad oder dem Reglergehäuse viele aufeinanderfolgende Rastelemente oder Rastvorsprünge ausgebildet, welche die Rastpunkte der Rasterung definieren. D. h. vorzugsweise sind diese Rastelemente oder Rastvorsprünge gleichmäßig über den Umfang bzw. Drehwinkel des Handrades verteilt. An dem jeweils anderen gegenüberliegenden Element (Handrad oder Reglergehäuse) können weniger Rastelemente, beispielsweise nur ein Rastelement vorgesehen sein, welches dabei vorzugsweise federnd ausgebildet ist.

Vorzugsweise ist an einer dem Reglergehäuse zugewandten Fläche eine ringförmige Riffelung ausgebildet, mit welcher zumindest ein Rastelement an dem Reglergehäuse im Eingriff ist. Die Riffelung besteht aus einer Vielzahl von aufeinanderfolgenden sich abwechselnden Erhebungen und Vertiefungen, welche in eine Oberfläche des Handrades, insbesondere einer inneren dem Reglergehäuse zugewandten Oberfläche ausgebildet sein können. Die Erhebungen definieren dabei die einzelnen Rastpunkte. In diese Riffelung greift ein Rastelement, welches an dem Reglergehäuse angeordnet ist, derart ein, dass bei Drehung des Handrades die Erhebungen der Riffelung von dem Rastelement überwunden werden müssen. Dabei folgen die Erhebungen und Vertiefungen entlang einer Kreislinie aufeinander, wobei sich diese Kreislinie konzentrisch zur Drehachse des Handrades erstreckt. D. h. in der Riffelung wechseln sich Erhebungen und Vertiefungen in Drehrichtung des Handrades ab, wobei vorzugsweise von der Riffelung ein geschlossener Ring gebildet wird, so dass die Rasterung auch bei mehr als einer Umdrehung des Handrades wirksam ist.

Alternativ ist auch eine umgekehrte Anordnung möglich, bei welcher an einer dem Handrad zugewandten Fläche des Reglergehäuses eine ringförmige Riffelung ausgebildet ist, mit welcher zumindest ein Rastelement an dem Handrad in Eingriff ist. Die Ausgestaltung der Riffelung entspricht dabei der vorangehenden Beschreibung. Hier ist nur eine umgekehrte Anordnung gewählt, bei welcher die Riffelung an dem Reglergehäuse und das zumindest eine Rastelement an dem Handrad angeordnet ist.

Vorzugsweise ist die Riffelung an einer sich normal zur Drehachse des Handrades erstreckenden Fläche angeordnet. D. h. die Riffelung ist nach Art einer Kronrad-Verzahnung ausgebildet. Das korrespondierende Rastelement, welches mit einer solchen Riffelung in Eingriff tritt, erstreckt sich bei einer solchen Riffelung dann vorzugsweise parallel zur Drehachse des Handrades insbesondere ist es in dieser Richtung federnd ausgebildet, um die Erhebungen der Riffelung bei Drehung des Handrades überwinden zu können. Alternativ ist es auch möglich, die Riffelung auf einer Umfangsfläche, beispielsweise einer Innenumfangsfläche des Handrades auszubilden, wobei dann ein korrespondierendes Rastelement sich vorzugsweise im Wesentlichen in radialer Richtung zu der Drehachse des Handrades erstreckt und insbesondere in dieser Richtung federnd ausgebildet ist.

Das zumindest eine Rastelement an dem Reglergehäuse oder das zumindest eine Rastelement an dem Handrad sind vorzugsweise als Kugelrastelement ausgebildet. Diese Ausgestaltung betrifft insbesondere dasjenige Rastelement, welches mit feststehenden Rastelementen, wie beispielsweise einer Riffelung in Eingriff tritt. Bei einem Kugelrastelement ist eine Rastkugel vorgesehen, welche mit dem korrespondierenden Rastelement, beispielsweise der Riffelung in Kontakt tritt. Dabei ist die Kugel federnd gelagert, so dass sie in einer Richtung quer zu dem Bewegungspfad der Rastelemente bei Drehung des Handrades bewegbar ist. So kann die Rastkugel von einer Riffelung, wenn eine Erhebung der Riffelung die Rastkugel passieren soll, gegen die Feder axial verschoben werden, die Erhebung passieren und dann in die nachfolgende Vertiefung der Riffelung eintreten.

Es ist zu verstehen, dass es ausreichend ist, ein Rastelement vorzusehen, welches mit einer Riffelung am jeweils anderen Bauteil in Eingriff tritt. Beispielsweise zu einer gleichmäßigen Krafteinleitung kann es jedoch bevorzugt sein, mehrere Rastelemente, wie beispielsweise Kugelrastelemente vorzusehen, welche weiter bevorzugt regelmäßig über den Umfang um die Drehachse des Handrades verteilt sind.

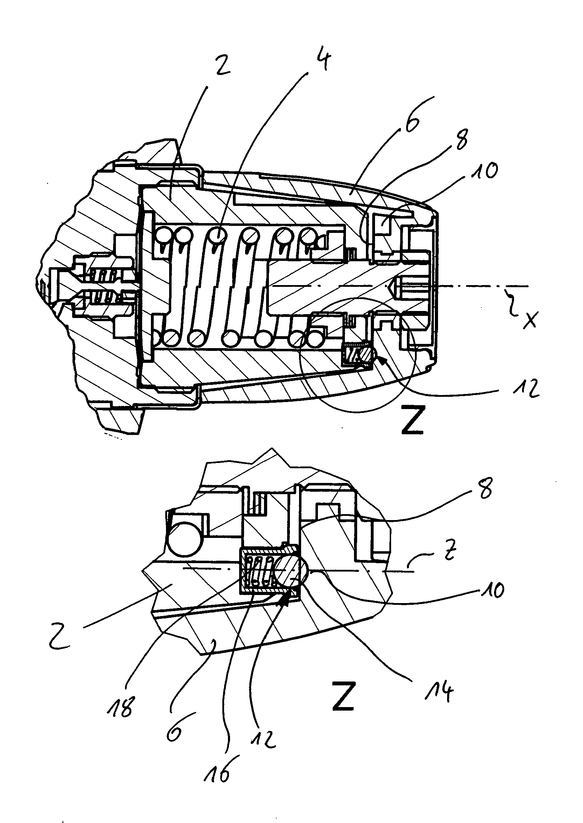

Nachfolgend wird die Erfindung anhand der beigefügten Figur beispielhaft beschrieben. Die Figur zeigt einen Druckregler mit Rasterung und eine vergrößerte Ansicht des Ausschnittes Z.

Der in der Figur gezeigte Druckregler weist grundsätzlich einen bekannten Aufbau auf. Der Druckregler hat ein Reglergehäuse 2, in welchem die eigentlichen Elemente des Druckreglers und insbesondere eine Feder 4, welche über ihre Federkraft den Druck vorgibt, angeordnet sind. An dem Reglergehäuse 2 ist ferner ein Handrad 6 zur Voreinstellung des Druckes angeordnet, wobei durch Drehung des Handrades 6 um die Drehachse X die Feder 4 in bekannter Weise unterschiedlich stark gestaucht wird, um die Federkraft, welche den Druck vorgibt, zu verändern. Im gezeigten Beispiel ist das Handrad 6 topfförmig ausgebildet und übergreift ein vorderes Ende des Reglergehäuses 2. An der dem Reglergehäuse 2 zugewandten inneren Stirnfläche 8 des Handrades, welche sich normal zu der Drehachse X erstreckt, ist eine sich ringförmig erstreckende Riffelung 10 ausgebildet. Diese Riffelung weist abwechselnd Erhebungen und Vertiefungen auf, wobei diese im gezeigten Beispiel durch Einbringen der Vertiefungen in Form von Ausnehmungen in die Stirnfläche 8 ausgebildet sind. Wenn das Handrad 6 aus Kunststoff gefertigt wird, kann diese Riffelung einfach und kostengünstig beim Spritzgießen des Handrades 6 mit eingebracht werden.

An einer der Stirnseite 8 und der Riffelung 10 gegenüberliegenden Position der Stirnseite des Reglergehäuses 2 ist ein Kugelrastelement 12 angeordnet, welches in die Riffelung 10 eingreift. Das Kugelrastelement weist eine Rastkugel 14 auf, welche in einem topfförmigen Gehäuse 16 in Richtung der Achse Z beweglich gelagert ist. Dabei liegt die Rastkugel 14 an einer in dem Gehäuse 16 angeordneten Druckfeder 18 an. Die Druckfeder 18 stützt sich am Boden des Gehäuses 16 ab und drückt die Rastkugel 14 in die Riffelung 10, so dass die Rastkugel 14, wenn eine Vertiefung der Riffelung der Rastkugel gegenüber liegt, in diese eintritt. Wenn das Handrad 6 um die Achse X weitergedreht wird, so dass eine Erhebung der Riffelung 10 der Rastkugel 14 gegenüber liegt, wird die Rastkugel 14 gegen die Feder 18 weiter in das Gehäuse 16 hinein gedrückt, bis die Rastkugel 14 dann in die darauffolgende Vertiefung der Riffelung 10 eintreten kann, wenn das Handrad weiter gedreht wird. Bei der Drehung des Handrades 6 ist somit jedes Mal, wenn eine Erhebung der Riffelung die Rastkugel 14 passiert, eine gewisse Kraft zu überwinden, welche durch die Druckkraft der Feder 18 vorgegeben wird. Dies erzeugt eine fühlbare Rasterung beim Drehen des Handrades 6, welche dem Benutzer ein besseres Gefühl bei der Einstellung des Druckes vermittelt. Die Riffelung 10 ist dabei so ausgebildet, dass eine regelmäßige Teilung gegeben ist, d. h. in regelmäßigen Winkelabständen wechseln sich Erhebungen und Vertiefungen der Riffelung ab.

In der Figur ist nur ein Kugelrastelement 12 gezeigt, es ist jedoch zu verstehen, dass an der Stirnseite des Reglergehäuses 2 auch mehr als ein Kugelrastelement angeordnet werden könnten, wobei diese dann vorzugsweise gleichmäßig über den Umfang der Längsachse X verteilt werden. Alternativ wäre es auch möglich, die Riffelung 10 an der Innenumfangsfläche des Handrades 6 auszubilden und das Kugelrastelement 12 so anzuordnen, dass sich dessen Bewegungsachse Z im Wesentlichen radial zu der Längsachse X erstreckt, anstatt parallel wie im gezeigten Beispiel.

### Bezugszeichenliste

- 2: Reglergehäuse
- 4: Feder
- 6: Handrad
- 8: innere Stirnseite des Handrades
- 10: Riffelung
- 12: Kugelrastelement
- 14: Rastkugel
- 16: Gehäuse
- 18: Feder
- X: Drehachse des Handrades 6
- Z: Bewegungsachse der Rastkugel 14

## Patentansprüche

1. Druckregler mit einem drehbaren Handrad (6) zur Einstellung des Druckes, bei welchem das Handrad (6) mit einer Rasterung versehen ist.

2. Druckregler nach Anspruch 1, bei welcher die Rasterung eine regelmäßige Teilung aufweist.

3. Druckregler nach Anspruch 1 oder 2, bei welchem jeder Rastschritt der Rasterung einer vorbestimmten Änderung des eingestellten Druckes entspricht.

4. Druckregler nach einem der vorangehenden Ansprüche, bei welchem
das Handrad (6) relativ zu einem Reglergehäuse (2) drehbar ist und an einer dem Reglergehäuse (2) zugewandten Seite (8) mit zumindest einem Rastelement (10) versehen ist, und
an dem Reglergehäuse (2) zumindest ein korrespondierendes Rastelement (12) derart angeordnet ist, dass es bei der Drehung des Handrades (6) mit dem zumindest einen Rastelement (10) an dem Handrad (6) in Eingriff tritt.

5. Druckregler nach Anspruch 4, bei welchem an einer dem Reglergehäuse (2) zugewandten Fläche des Handrades (6) eine ringförmige Riffelung (10) ausgebildet ist, mit welcher zumindest ein Rastelement (12) an dem Reglergehäuse (2) im Eingriff ist.

6. Druckregler nach Anspruch 4, bei welchem an einer dem Handrad (6) zugewandten Fläche des Reglergehäuses (2) eine ringförmige Riffelung ausgebildet ist, mit welcher zumindest ein Rastelement an dem Handrad in Eingriff ist.

7. Druckregler nach Anspruch 5 oder 6, bei welchem die Riffelung (10) an einer sich normal zur Drehachse (X) des Handrades (6) erstreckenden Fläche (8) angeordnet ist.

8. Druckregler nach einem der Ansprüche 4 bis 7, bei welchem das zumindest eine Rastelement an dem Reglergehäuse (2) oder das zumindest eine Rastelement an dem Handrad (6) als Kugelrastelement (12) ausgebildet sind.
